# EUROPÄISCHE PATENTSCHRIFT

(11) **EP 0 391 098 B1**
(45) Veröffentlichungstag und Bekanntmachung des Hinweises auf die Patenterteilung: **16.08.1995**
(21) Anmeldenummer: 90104824.9
(22) Anmeldetag: 14.03.1990
(51) Int. Cl.: B29C 45/00, B29C 45/77, B29C 45/14

(54) **Vorrichtung zum Anspritzen eines Kunststoffteiles**
Apparatus for the application of a plastic part by injection moulding
Appareil pour surmouler une pièce en matière plastique

(30) Priorität: 07.04.1989 DE 3911246
(43) Veröffentlichungstag der Anmeldung: 10.10.1990
(73) Patentinhaber: Tetra Laval Holdings & Finance SA, 1009 Pully (CH)
(72) Erfinder: Reil, Wilhelm, D-6124 Bensheim 1 (DE)
(74) Vertreter: Weber, Dieter, Dr.

(56) Entgegenhaltungen:
- DE-A- 1 529 886
- DE-A- 2 454 193
- DE-B- 1 091 744

## Beschreibung

Die Erfindung betrifft eine Vorrichtung zum Spritzgießen eines Kunststoffteiles mit einer Gesamtspritzeinheit mit Düse, angetriebener Extrudierschnecke, Plastifizierzylinder und mit einer Kunststoffeinschießeinrichtung, wobei die Düse mit dem Plastifizierzylinder verbunden ist, der Plastifizierzylinder und die Düse stationär am Maschinengestell befestigt sind, die Extruderschnecke von einem Elektromotor angetrieben ist und die Kunststoffeinschießeinrichtung einen von einer Steuerkrafteinheit beaufschlagten und angetriebenen, zweiarmigen Hebel in Berührung mit der in Richtung ihrer Längsachse bewegbaren Extruderschnecke aufweist.

Es ist bekannt, Flüssigkeitspackungen aus beidseitig mit Kunststoff beschichtetem Papier herzustellen, wobei der Boden durch Umfalten der Tubuswände gebildet wird, während der Deckel aus thermoplastischem Material ohne Papier angespritzt wird. Das flexible Papiermaterial liegt in Bahnform vor und wird einer Kunststoffanspritzvorrichtung so zugeführt, daß in einem gewissen Arbeitstakt der Papiertubus auf einem beweglichen Dorn als Innenformteil angeordnet wird, Außenformteile herumbewegt und so gegeneinander gepreßt werden, daß ein Spritzformraum gebildet wird, neben dem der Austritt der Düse endet, so daß die im Plastifizierzylinder bewegbare Extruderschnecke zum Einschießen des Kunststoffes in den Spritzformraum längs bewegt werden kann.

Aus der DE-B-1 091 744 ist eine Vorrichtung mit den Merkmalen der eingangs beschriebenen Art bekannt. Bei dieser Vorrichtung ist das Getriebe für den Antrieb der Kurbelstange eine Schnecke, weshalb nur geringe Einschießgeschwindigkeiten erreicht werden können. Die Extruderschnecke kann nur mit mäßiger Geschwindigkeit in ihrer Längsrichtung bewegt werden.

Wenn aber ein Kunststoffteil an einen Abschnitt aus Papier angespritzt werden soll, insbesondere ein Kunststoffteil mit dünnen Wandteilen, dann braucht man wesentlich höhere Einschießgeschwindigkeiten, weil sonst der plastifizierte Kunststoff zu schnell abkühlt, ohne die richtigen, vollständigen Formen zu bilden.

Der Erfindung liegt daher die Aufgabe zugrunde, die Vorrichtung zum Spritzgießen des Kunststoffteiles der bekannten Art so zu verbessern, daß mit geringem technischem Aufwand ein Anspritzen auch an einen flexiblen Tubus gelingen kann, wobei das angespritzte Kunststoffteil wenigstens teilweise sogar dünne Wandabschnitte aufweist.

Diese Aufgabe wird erfindungsgemäß dadurch gelöst, daß die Steuerkrafteinheit der Kunststoffeinschießeinrichtung einen Preßfluidzylinder aufweist, der am freien Ende des ersten Armes des zweiarmigen Hebels angebracht ist und einen Kolben aufweist, dessen Kolbenstange gegen das Maschinengestell abgestützt ist, daß die Düse von außen wenigstens teilweise von zwei beweglichen Außenformteilen umfaßt wird und das Innenformteil von einem beweglichen Dorn gebildet ist und daß die Vorrichtung dem Anspritzen des Kunststoffteiles an einen Abschnitt aus flexiblem, bahnförmigem Material dient. Durch die Erfindung wird der Vorteil erreicht, daß Flüssigkeiten aus dem Lebensmittelbereich verpackt werden können, z.B. Milch, bei denen hohere Anforderungen an die Hygiene der Verpackungsmaschine gestellt werden. In solchen Verpackungsmaschinen werden häufig aus zugeführten Papierbahnen und Kunststoff einseitig offene Packungen in großer Stückzahl pro Zeiteinheit erstellt, dann gefüllt, z.B. in einer Molkerei, verschlossen und in eine Umverpackung verbracht. Die Einschießeinrichtung gemäß der Erfindung befindet sich an einer solchen Verpackungsmaschine und muß daher ebenfalls hohen Hygieneanforderungen genügen. Auch der Antrieb des zweiarmigen Hebels sollte daher mit möglichst wenig Maschinenteilen versehen sein, die geschmiert werden müssen, wie z.B. das Getriebe mit der Schnecke nach dem vorstehend gewürdigten Dokument. Durch den Preßfluidzylinder gemäß der Erfindung werden aufwendige Schmierstellen vermieden, so daß die erfindungsgemäße Vorrichtung auch wesentlich hygienischer arbeitet.

Bekannte thermoplastische Spritzsysteme sind komplizierter als die erfindungsgemäße Vorrichtung aufgebaut, wenn der Plastifizierzylinder gegenüber dem Maschinengestell in bestimmter Weise bewegbar sein muß. Erfindungsgemäß hingegen läßt sich durch die Befestigung des Plastifizierzylinders mit der Düse stationär am Maschinengestell die Anspritzvorrichtung wesentlich vereinfachen. Es entfallen Hydraulikantriebe und damit die Ölleckageprobleme bei Verpackungsmaschinen für Lebensmittel. Die Vereinfachung einer solchen Spritzmaschine ist besonders dann gegeben, wenn das an den Abschnitt aus flexiblem Material anzuspritzende Kunststoffteil über große Stückzahlen im Betrieb keine Formänderung erfahren muß, also beispielsweise der Deckel einer Flüssigkeitspackung immer das gleiche Produkt ist, welches mit der erfindungsgemäßen Vorrichtung gespritzt werden soll.

Als Fluid sieht man vorzugsweise Luft vor, so daß die Steuerkrafteinheit mit einem Preßluftzylinder arbeitet und der Fachmann die ihm bekannten Pneumatiktechniken einsetzen kann, mit deren Hilfe eine saubere, einwandfreie und gut steuerbare Bewegung und auch Antriebsmöglichkeit gegeben sind. Der erste Arm des zweiarmigen Hebels ist länger als der zweite Arm. Die Kraft muß also am ersten Arm angreifen, um über den zweiten kurzen Arm die vervielfachte Kraft auf die Extruderschnecke aufgringen zu können. Deshalb greift der Preßfluidzylinder am freien Ende des ersten Armes an. Das andere, gegenüberliegende Ende dieses ersten Armes liegt in der Drehachse des zweiarmigen Hebels. Durch Einspritzen von Fluid, vorzugsweise Luft, kann der am ersten Arm befestigte Kolben also gegenüber dem Maschinengestell bewegt werden, vorzugsweise von diesem fort, so daß sich zwangsläufig dadurch der zweite kurze Arm auf das Maschinengestell zubewegt, wodurch die gewünschte Einschießbewegung bewirkt wird.

Günstig ist es dabei, wenn das der Düse abgewandte Ende der Extruderschnecke mit einem Zahnrad verkeilt ist, welches mit dem Antriebsritzel eines am Maschinengestell befestigten Elektromotors in Eingriff steht, und wenn der Durchmesser des Zahnrades größer ist als der des Antriebsritzels. Dies ist eine weitere Maßnahme zur Vereinfachung der bekannten Systeme, wobei das Dosieren des später zu verspritzenden Granulates, nachdem es plastifiziert ist, mit einem Elektromotor und Zahnradgetriebe erfolgt anstelle mit einem Hydraulikzylinder. Durch den kleinen Durchmesser des Antriebsritzels am Elektromotor und den großen Durchmesser des Zahnrades an der Extruderschnecke ist eine Kraftmultiplikation möglich, die im vorliegenden Falle, wie die Praxis gezeigt hat, ausreicht, um die für die Dosierung des Granulates notwendige Kraft zur Drehung der Extruderschnecke von einem Elektromotor aufzubringen.

Wenn weiterhin das Antriebsritzel des Elektromotors in Richtung seiner Achse länger ausgebildet ist als das Zahnrad an der Extruderschnecke, dann kann die Extruderschnecke in Richtung ihrer Längsachse bewegt werden, und dennoch bleibt das Zahnrad mit dem Ritzel des Elektromotors in Krafteingriff. Beim dosierten Eingeben des Granulates in den Raum innerhalb des Plastifizierzylinders und vor die Spitze der Extruderschnecke kann nämlich eine gewisse Bewegung der Extruderschnecke in ihrer Längsrichtung auftreten, allein wenn man bedenkt, daß das eingefüllte Granulat möglichst dicht gepackt sein muß und sich gegebenenfalls beim Plastifizieren später sogar noch im Volumen verkleinert.

Vorteilhaft ist es erfindungsgemäß ferner, wenn der erste Arm des zweiarmigen Hebels der Kunststoffeinschießeinrichtung um ein Vielfaches, vorzugsweise das Zehnfache, länger ist als der zweite Arm des zweiarmigen Hebels. Der Fachmann weiß, daß nach Füllen des Plastifizierzylinders mit Granulat durch den Ölmotor und nach Heranfahren der Gesamteinheit mittels Hydraulikzylinder ein weiterer Hydraulikzylinder dafür sorgen muß, daß die Extruderschnecke mit hohen Kräften zum Einspritzen in ihrer Längsrichtung mit der Spitze nach vorn zur Düse hin geschossen wird. Wenn die Dosierung mit einem Elektromotor durchgeführt wird und wenn außerdem die Gesamtspritzeinheit mit der Düse am Maschinengestell befestigt ist, dann können die Einspritzkräfte von der Kunststoffeinschießeinrichtung ohne Hydraulikantrieb vorgenommen und aufgebracht werden. Die Lösung erfolgt nämlich durch den erwähnten zweiarmigen Hebel, dessen erster Arm z.B. zehnmal länger ist als der zweite Arm, welcher auf das zahnradseitige, hier "hinten" genannte Ende einwirkt. Dabei liegt die Drehachse des zweiarmigen Hebels, die den ersten Arm vom zweiten trennt, senkrecht zur Längsachse der Extruderschnecke. Auf diese Weise kann bei Betätigung des ersten langen Armes mit entsprechender Vervielfachung die Kraft auf den zweiten kurzen Arm so aufgebracht werden, daß dieser die Extruderschnecke plötzlich, schnell und mit hoher Kraft in Richtung ihrer Längsachse mit der Spitze nach vorn - im Beispiel hier "unten" genannt - schießt. Das Öffnen und Schließen der Düse selbst kann mit einem kleinen hydraulischen Antrieb erfolgen, der aber nur einen geringen Ölverbraucht hat, so daß die Leckage nicht ins Gewicht fällt und die hohen Anforderungen an die Hygiene auch bei Lebensmittelverpackungsmaschinen erfüllt werden können.

Die Steuerkrafteinheit ist weiter dadurch ausgestaltet, und es ergeben sich für die Erfindung weitere Vorteile dadurch, daß der Preßfluidzylinder einen ersten, dem ersten Arm des zweiarmigen Hebels abgewandten Fluideinlaß und einen zweiten, dem ersten Arm zugewandten Fluideinlaß aufweist und daß der erste oder zweite Fluideinlaß mit einem Preßfluidkessel mit im wesentlichen konstantem Fluiddruck verbunden ist, während der zweite oder erste Fluideinlaß mit einem Fluiddrucksteuergerät verbunden ist. Solche Steuergeräte können Ventile sein. Mit diesen Ventilen kann im Falle einer pneumatischen Steuerkrafteinheit, wenn das Fluid also Luft ist, über den zweiten Lufteinlaß eine Steuerung erfolgen, welche das freie Ende des ersten langen Armes des zweiarmigen Hebels in die eine oder andere Richtung um seine Drehachse sich bewegen läßt mit der Folge einer entsprechend umgekehrten Richtung des zweiten kurzen Hebels. Dadurch wird eine entsprechende Kraft in der gewünschten Bewegungsrichtung auf die Extruderschnecke aufgebracht.

Im Vergleich zu den bekannten hydraulischen Geräten ist erfindungsgemäß die Hydraulik weitgehend vermieden, wodurch ein billigeres und einfacher aufgebautes thermoplastisches Spritzsystem erhalten werden kann. Bei der Produktion wird mit Vorteil erheblich Energie eingespart, denn es wird erheblich weniger Hydrauliköl bewegt, und durch den neuen Aufbau entfallen auch sehr viele derjenigen Bewegungen, die bei den herkömmlichen Systemen eingeplant waren und im allgemeinen auch entsprechend benutzt wurden. Außerdem ist der bekannte schlechte Wirkungsgrad des hydraulischen Systems ausgeschaltet, denn erfindungsgemäß werden Antriebe verwendet, die gegenüber hydraulischen Systemen wesentlich effektiver arbeiten.

Weitere Vorteile, Merkmale und Anwendungsmöglichkeiten der vorliegenden Erfindung ergeben sich aus der folgenden Beschreibung eines bevorzugten Ausführungsbeispieles in Verbindung mit den Zeichen. Es zeigen:
- Figur 1: die Seitenansicht der Anspritzvorrichtung mit Dornrad, Außenformteilen, Düse und Gesamtspritzeinheit und
- Figur 2: eine andere Seitenansicht, wenn man Figur 1 z.B. von links nach rechts betrachtet.

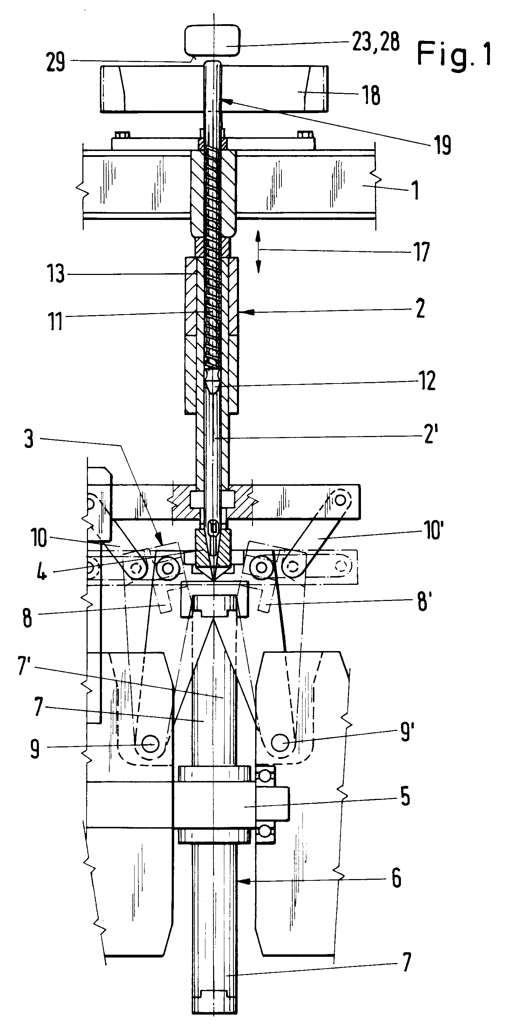

Am Maschinengestell 1 ist im oberen Bereich die mit 2 bezeichnete Gesamtspritzeinheit befestigt, an deren dem allgemein mit 3 bezeichneten Werkzeug zugewandten Ende die Düse 4 angebracht ist. Diese befindet sich durch die feste Anbringung der Gesamtspritzeinheit 2 am Maschinengestell 1 in festem Abstand über der Welle 5 eines Dornrades 6, dessen Dorne 7 radial abstehen und intermittierend so geschaltet werden, daß jeweils ein Dorn 7 als Innenformteil in der in Figur 1 gezeigten Position unter der Düse 4 so steht, daß die Längsachse 7′ dieses Dornes 7 mit der Längsachse 2′ der Gesamtspritzeinheit 2 in Flucht liegt. Der eigentliche Formraum für den aus Kunststoff zu spritzenden Deckel einer Flüssigkeitspackung wird auf der Oberseite des Dornes 7 vom Dorn 7 als Innenformteil und die zwei Außenformteile 8, 8′ gebildet. Diese sind um Achsen 9, 9′ (Figur 1) mittels Antriebshebeln 10, 10′ in eine geschlossene bzw. geöffnete Stellung schwenkbar. In Figur 1 ist die geöffnete Stellung strichpunktiert gezeigt, und die geschlossene Stellung ist mit ausgezogenen Linien dargestellt. Man erkennt, daß die zwei beweglichen Außenformteile 8, 8′ die Düse 4 und das Innenformteil 7 in Gestalt des Dornes wenigstens teilweise umgreifen.

Beim Spritzvorgang wird durch Vorschießen der Extruderschnecke 11 in Richtung deren Längsachse 2′ mit der Spitze 12 vorn, also nach unten in Richtung auf die Düse 4 zu, Kunststoff aus der Düse in den Formraum gespritzt. Nach Abschluß des Spritzvorganges und erster Kühlung werden die Außenformteile 8, 8′ in die in Figur 1 mit gestrichelten Linien gezeigte, geöffnete Position geschwenkt, und das Dornrad 6 schaltet um 90° weiter, so daß das Innenformteil 7 in Form des beweglichen Dornes aus dem Raum unter der Düse 4 herausbewegt wird. Bei dieser Bewegung wird ein weiterer Dorn als nächstes Innenformteil in die Position unter der Düse 4 gedreht, so daß sich derselbe Vorgang wiederholt.

Für den vorliegenden Teil der Anspritzvorrichtung wird der Augenmerk jetzt auf die Gesamtspritzeinheit 2 gerichtet, deren Plastifizierzylinder 13 die Schnecke 11 so umgibt, daß zum dosierten Befüllen mit Granulat zwischen der Düse 4 und der Spitze 12 der Extruderschnecke 11 ein Füllraum 14 entsteht.

Zum Befüllen dieses Raumes 14 muß die Extruderschnecke 11 drehbar sein, damit das schematisch dargestellte Granulat 15 an der Einfüllstelle 16 zugeführt und durch die Schnecke in den Füllraum 14 nach vorn unten bewegt werden kann. Außerdem muß die Extruderschnecke 11 in Richtung ihrer Längsachse 2′ gemäß Doppelpfeil 17 nach oben und unten bewegbar sein, unter anderem auch zum Einschießen des Kunststoffes nach dem Plastifizieren im Raum 14, wie nachfolgend noch beschrieben wird.

Am vorderen, unten Ende weist die Extruderschnecke 11 die Spitze 12 auf, während am oberen, hinteren, d.h. der Spitze 12 gegenüberliegenden Ende ein Zahnrad 18 durch Nut-und-Feder-Verbindung aufgekeilt ist. Mit 19 wird das der Düse 4 abgewandte Ende der Extruderschnecke 11 bezeichnet, an welchem also das Zahnrad 18 befestigt ist.

Am Maschinengestell 1 ist ferner ein Elektromotor 20 befestigt, dessen Antriebsritzel 21 mit dem Zahnrad 18 der Extruderschnekke 11 in Kämmeingriff steht. Die Drehachsen des Elektromotors 20 mit Antriebsritzel 21 einerseits und des Zahnrades 18 andererseits sind parallel zueinander und natürlich auch parallel zur Längsachse 2′ der Extruderschnecke 11 angeordnet.

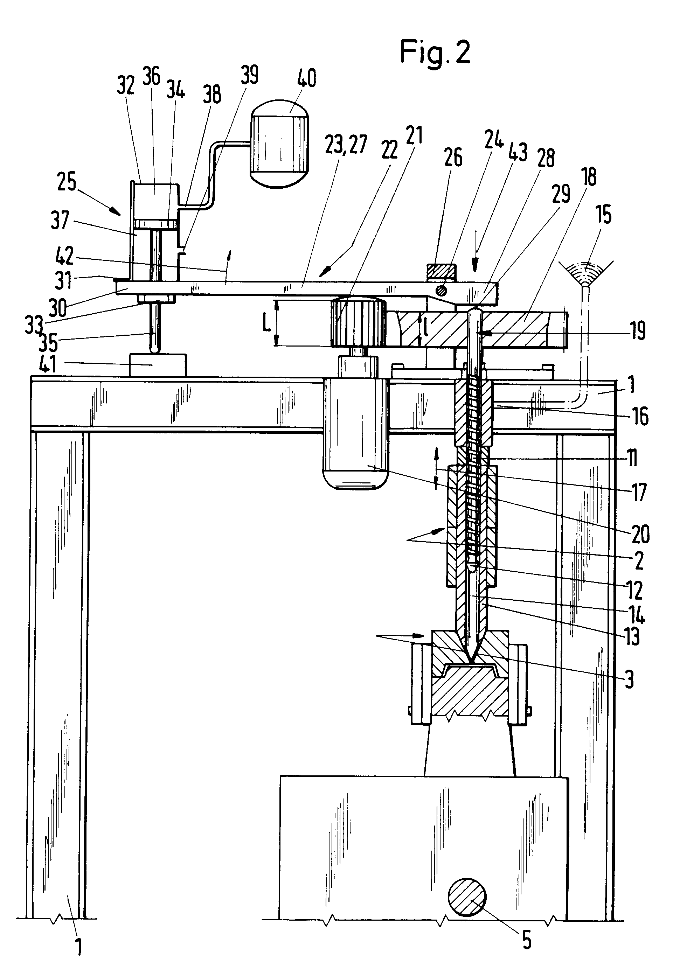

Aus Figur 2 erkennt man, daß die Länge L des Antriebsritzels 21 größer it als die Länge 1 des Zahnrades 18. Die Differenz zwischen den beiden Längen L und 1 ist etwa gleich dem Hub, den die Extruderschnecke 11 in Richtung des Doppelpfeiles 17 durchführen kann.

In Verbindung mit diesem Hub ist die Beschreibung einer Kunststoffeinschießeinrichtung 22 zweckmäßig. Diese besteht im wesentlichen aus einem zweiarmigen Hebel 23, der um eine Achse 24 drehbar ist, und einer Steuerkrafteinheit 25, die beide anhand Figur 2 jetzt genauer beschrieben werden.

Die Drehachse 24 des zweiarmigen Hebels 23 ist an einem am Maschinengestell 1 befestigten Träger 26 angeordnet. Der erste Arm 27 des zweiarmigen Hebels 23 ist um ein Vielfaches länger ausgebildet als der zweite kurze Arm 28, dessen der Extruderschnecke 11 und hier insbesondere ihrem zahnradseitigen Ende 19 zugewandte Fläche 29 mit der oberseitigen Fläche des zahnradseitigen Endes 19 der Extruderschnecke 11 in Wirkeingriff bringbar ist. Hält man den ersten Arm 27 beispielsweise in der in Figur 2 gezeigten horizontalen Position fest, dann kann sich die Extruderschnecke 11 nur bis zum Anschlag an die Fläche 29 des zweiten Armes 28 in Richtung des Doppelpfeiles 17 nach oben auf den zweiten Arm zu bewegen.

Am freien Ende 30 des ersten Armes 27 ist über eine Halterung 31 ein Pneumatikzylinder 32 angebracht, wobei die Befestigung zwischen dem freien Ende 30 des langen Armes 27 und dem Pneumatikzylinder 32 auch bei 33 angedeutet ist. Im Zylinder 32 ist ein Kolben 34 mit Kolbenstange 35 bewegbar, und die ganze Einheit 31 bis 35 wird die Steuerkrafteinheit 25 genannt.

Im vorliegenden Falle ist der Preßfluidzylinder 32 als pneumatischer oder Luftzylinder anzusehen und gibt einen oberen Druckraum 36 auf der einen, oberen Seite des Kolbens 34 und einen unteren Druckraum 37 auf der gegenüberliegenden Seite des Kolbens 34 vor. Der äußere, obere Druckraum 36 ist mit einem dem ersten Arm 27 abgewandten Fluideinlaß 38 versehen, während der zweite Druckraum 37 auf der bezüglich des Kolbens 34 anderen Seite des Preßluftzylinders 32 mit einem zweiten Fluideinlaß 39 versehen ist, welcher dem ersten Arm 27 des zweiarmigen Hebels 23 zugewandt ist.

Der erste Fluideinlaß 38 ist mit einem Preßfluidkessel 40 verbunden, in welchem durch eine entsprechende Fluiddruckeinrichtung ein im wesentlichen konstanter Fluiddruck von z.B. 5 bis 6 bar aufrechterhalten wird. In dem hier gewählten Beispiel der Pneumatiksteuerung handelt es sich um einen konstanten Luftdruck von 5 bis 6 bar, der in dem Preßluftkessel 40 aufrechterhalten wird.

Der zweite Fluideinlaß 39 ist mit einem nicht dargestellten Fluiddrucksteuergerät, z.B. mittels einer Pumpe und Ventilen, so verbunden, daß hier entweder der gleiche Druck von z.B. 5 oder 6 bar aufgebaut werden kann, gegebenenfalls, erhöht oder auch entlüftet werden kann. Es versteht sich, daß bem Entlüften des zweiten Fluideinlasses 39 der Luftdruck von z.B. 5 bar im oberen, äußeren Druckraum 36 ein Hochziehen des Preßluftzylinders 32 gegenüber der Abstützung 41 am Maschinengestell 1 bewirkt, womit der erste Arm 27 in Uhrzeigerrichtung gemäß gebogenem Pfeil 42 um die Drehachse 24 geschwenkt wird mit der Folge, daß der zweite, rechte, kurze Arm 28 des zweiarmigen Hebels 23 entsprechend ebenfalls in Uhrzeigerrichtung gedreht wird und mit seiner Eingriffsfläche 29 die Extruderschnecke 11 z.B. zum Einschießen von Kunststoff nach unten pressen kann.

Im Betrieb wird die hier beschiebene Anspritzvorrichtung zunächst über den einlaß 16 mit Granulat 15 versorgt, wobei der Elektromotor 20 über das Antriebsritzel 21 und das Zahnrad 18 die Extruderschnecke 11 dreht, bis der Füllraum 14 mit Granulat gefüllt ist.

Der beim dosierenden Herunterführen von Granulat in den Füllraum 14 entstehende Druck auf die Extruderschnecke 11 in Richtung des Doppelpfeiles 17 nach oben bewirkt ein Anschlagen des zahnradseitigen Endes 19 der Extruderschnecke 11 an die gegenüberliegende Oberfläche 29 des kurzen rechten zweiten Armes 28 des zweiarmigen Hebels 23. Damit die Extruderschnecke 11 nicht nach oben entweicht, muß ein Gegendruck gemäß Pfeil 43 in Richtung der Längsachse 2′ der Extruderschnecke 2 auf diese nach unten auf die Düse 4 hin erzeugt werden. Dieser Gegendruck 43 kompensiert den Druck beim Einfüllen des Granulates 15.

Der Gegendruck 43 wird dadurch erzeugt, daß der erste Arm 27 des zweiarmigen Hebels 23 in voreingestellter Lage gehalten wird. Beispielsweise wird durch den vorgegebenen Fluiddruck im oberen Druckraum 36 die Position des Kolbens 34 bezüglich der Abstützung 41 am Maschinengestell 1 festgelegt. Es versteht sich, daß in diesem Falle der zweite Fluideinlaß 39 mit dem gleichen Druck wie im Preßluftkessel 40 beaufschlagt sein muß, so daß der Kolben 34 sich im Preßluftzylinder 32 nicht bewegt.

Ist das Granulat 15 im Füllraum 14 durch Erwärmen geschmolzen und soll es in den Formraum eingespritzt werden, dann wird der zweite Fluideinlaß 39 durch Öffnen entlüftet, der Kolben 34 bewegt sich im Preßluftzylinder 32 nach unten, wodurch der Preßluftzylinder 32 mitsamt der Halterung 31 und dem freien Ende 30 des ersten Armes 27 in Richtung des Pfeiles 42 im Uhrzeigersinn nach oben gezogen wird. Diese Bewegung erfolgt schlagartig, wenn der zweite Fluideinlaß 39 schlagartig entlüftet wird. Entsprechend schlagartig bewegt sich die Oberfläche 29 des zweiten Armes 28 nach unten auf das zahnradseitige Ende 19 der Extruderschnecke 11 hin und preßt die Spitze 12 nach unten auf die Düse 4 zu. Damit ist der Einspritzvorgang unter Aufbringung hoher Einspritzkräfte abgeschlossen.

## Patentansprüche

1. Vorrichtung zum Spritzgießen eines Kunststoffteiles mit einer Gesamtspritzeinheit (2) mit Düse (4), angetriebener Extrudierschnecke (11), Plastifizierzylinder (13) und mit einer Kunststoffeinschießeinrichtung (22), wobei die Düse (4) mit dem Plastifizierzylinder (13) verbunden ist, der Plastifizierzylinder (13) und die Düse (4) stationär am Maschinengestell (1) befestigt sind, die Extruderschnecke (11) von einem Elektromotor (20) angetrieben ist und die Kunststoffeinschießeinrichtung (22) einen von einer Steuerkrafteinheit (25) beaufschlagten und angetriebenen, zweiarmigen Hebel (23) in Berührung mit der in Richtung ihrer Längsachse (2') bewegbaren Extruderschnecke (11) aufweist, dadurch gekennzeichnet, daß die Steuerkrafteinheit (25) der Kunststoffeinschießeinrichtung (22) einen Preßfluidzylinder (32) aufweist, der am freien Ende (30) des ersten Armes (27) des zweiarmigen Hebels (23) angebracht ist und einen Kolben (34) aufweist, dessen Kolbenstange (35) gegen das Maschinengestell (1, 41) abgestützt ist, daß die Düse (4) von außen wenigstens teilweise von zwei beweglichen Außenformteilen (8, 8') umfaßt wird und das Innenformteil (7) von einem beweglichen Dorn gebildet ist und daß die Vorrichtung dem Anspritzen des Kunststoffteiles an einen Abschnitt aus flexiblem, bahnförmigem Material dient.

2. Vorrichtung nach Anspruch 1, dadurch gekennzeichnet, daß der erste Arm (27) des zweiarmigen Hebels (23) der Kunststoffeinschießeinrichtung (22) um ein Vielfaches, vorzugsweise das Zehnfache, länger ist als der zweite Arm (28) des zweiarmigen Hebels (23).

3. Vorrichtung nach Anspruch 1 oder 2, dadurch gekennzeichnet, daß der Preßfluidzylinder (32) einen ersten, dem ersten Arm (27) des zweiarmigen Hebels (23) abgewandten Fluideinlaß (38) und einen zweiten, dem ersten Arm (27) zugewandten Fluideinlaß (39) aufweist und daß der erste oder zweite Fluideinlaß (38, 39) mit einem Preßfluidkessel (40) mit im wesentlichen konstantem Fluiddruck (5-6 bar) verbunden ist, während der zweite oder erste Fluideinlaß (39) mit einem Fluiddrucksteuergerät verbunden ist.

## Claims

1. Apparatus for injection moulding a plastics part having an overall injection unit (2) with nozzle (4), a driven extruder screw (11), a plasticising cylinder (13) and a plastics shooting-in device (22), wherein the nozzle (4) is connected to the plasticising cylinder (13), the plasticising cylinder (13) and the nozzle (4) are feed stationarily on the machine frame structure (1), the extruder screw (11) is driven by an electric motor (20) and the plastics shooting-in device (22) has a two-arm lever (23) which is driven and acted upon by a control force unit (25), in contact with the extruder screw (11) which is movable in the direction of its longitudinal axis (2'), characterised in that the control force unit (25) of the plastics shooting-in device (22) has a pressure fluid cylinder (32) which is disposed at the free end (30) of the first arm (27) of the two-arm lever (23) and has a piston (34) whose piston rod (35) is supported against the machine frame structure (1, 41), that the nozzle (4) is embraced from the outside at least in part by two movable external mould portions (8, 8') and the internal mould portion (7) is formed by a movable bar member and that the apparatus serves for injection moulding the plastics part on a portion of flexible material in web form.

2. Apparatus according to clad 1 characterised in that the first arm (27) of the two-arm lever (23) of the plastics shooting-in device (22) is longer by a multiple, preferably ten times, than the second arm (28) of the two-arm lever (23).

3. Apparatus according to claim 1 or claim 2 characterised in that the pressure fluid cylinder (32) has a first fluid inlet (38) which is remote from the first arm (27) of the two-arm lever (23) and a second fluid inlet (39) which is towards the first arm (27) and that the first or second fluid inlet (38, 39) is connected to a pressure fluid vessel (40) with a substantially constant fluid pressure (5-6 bars) while the second or first fluid inlet (39) is connected to a fluid pressure control device.

## Revendications

1. Dispositif pour mouler par injection une pièce en matière plastique muni d'une unité d'injection générale (2) comportant une buse (4), une vis d'extrusion entraînée (11), un cylindre de plastification (13), et d'un dispositif (22) de chargement de matière plastique, la buse (4) étant reliée au cylindre de plastification (13), le cylindre de plastification (13) et la buse (4) étant montés fixes sur le bâti (1) de la machine, la vis d'extrusion (11) étant entraînée par un moteur électrique (20), et le dispositif de chargement de matière plastique (22) possédant un levier à deux bras (23), qui est chargé et entraîné par une unité (25) produisant une force de commande et qui est en contact avec la vis d'extrusion (11) déplaçable dans la direction de son axe longitudinal (2'), caractérisé par le fait que l'unité (25) produisant une force de commande du dispositif de chargement de matière plastique (22) possède un vérin à fluide sous pression (32), qui est monté sur l'extrémité libre (30) du premier bras (27) du levier à deux bras (23) et possède un piston (34), dont la tige de piston (35) prend appui sur le bâti (1, 41) de la machine, en ce que la buse (4) est entourée extérieurement, au moins en partie, par deux éléments de moule extérieurs mobiles (8,8') et l'élément de moule intérieur (7) est formé par un mandrin mobile, et en ce que le dispositif sert à surmouler la pièce en matière plastique sur un tronçon de matériau flexible en forme de bande.

2. Dispositif selon la revendication 1, caractérisé en ce que le premier bras (27) du levier à deux bras (23) du dispositif de chargement de matière plastique (22) est plus long, d'un multiple, de préférence dix fois plus long, que le second bras (28) du levier à deux bras (23).

3. Dispositif selon la revendication 1 ou 2, caractérisé en ce que le vérin à fluide sous pression (32) comporte une première entrée (38) pour le fluide, qui est située à l'opposé du premier bras (27) du levier à deux bras (23), et une seconde entrée (39) pour le fluide, qui est située du côté du premier bras (27), et en ce que la première ou la seconde entrée (38,39) pour le fluide est reliée à un réservoir à fluide sous pression (40), dans lequel règne une pression de fluide (5-6 bars) essentiellement constante, tandis que la seconde ou la première entrée (39) pour le fluide est reliée à un appareil de commande de la pression du fluide.
